# EUROPEAN PATENT SPECIFICATION

(11) **EP 1 032 209 B1**
(45) Date of publication and mention of the grant of the patent: **28.01.2009**
(21) Application number: 00103420.6
(22) Date of filing: 25.02.2000
(51) Int. Cl.: H04N 7/18, B60R 1/00

(54) **Method and apparatus for monitoring circumference of vehicle**
Vorrichtung und Verfahren zur Überwachung der Umgebung eines Fahrzeuges
Méthode et appareil de contrôle d'un véhicule

(30) Priority: 25.02.1999 JP 4886799
(43) Date of publication of application: 30.08.2000
(73) Proprietor: YAZAKI CORPORATION, Minato-ku Tokyo 108-8333 (JP)
(72) Inventor: Ishikawa, Naoto, Yazaki Corporation, Susono-shi, Shizuoka-ken 410-1194 (JP); Okamoto, Keiki, Hamana-gun, Shizuoka-ken 431-0213 (JP)
(74) Representative: HOFFMANN EITLE

(56) References cited:
- US-A- 5 521 633
- PATENT ABSTRACTS OF JAPAN vol. 1998, no. 10, 31 August 1998 (1998-08-31) & JP 10 119672 A (ISUZU MOTORS LTD), 12 May 1998 (1998-05-12)

## Description

### BACKGROUND OF THE INVENTION

### 1. Field of the Invention

The present invention relates to a vehicle's circumference monitoring method which is employed to determine whether or not there exists an obstacle (or obstacles) around a vehicle owing to the application of a designated image processing on the circumferential picture taken by using an imaging unit installed in the vehicle, for example, a CCD camera. Particularly, it relates to a vehicle's circumference monitoring method which can provide the result of monitoring the circumference of the owner's vehicle with high-leveled reliability and also related to a vehicle's circumference monitoring apparatus adopting the vehicle's circumference monitoring method.

### 2. Description of the Related Art

Japanese Patent Application Laid-open Publication No. 7-50769 discloses a vehicle's circumference monitoring method which may be used when it is required to monitor the existence of the obstacle (or obstacles) around the vehicle. According to the monitoring method, it has been carried out to apply the designated image processing on the picture around the vehicle brought by the imaging unit, for example, the CCD camera.

In detail, it is executed to take "rear-side" pictures in sequence through the traveling vehicle. Upon selection of two sequence frames (scenes) from so-taken consecutive "rear-side" pictures, it is further executed to detect a displacement of an identical point through the sequence frames over as "optical flow". On the basis of the so-detected optical flow, there can be monitored the accessibility of a following vehicle against the driver's own vehicle or the same of another vehicle traveling on the neighboring traffic lane against the driver's own vehicle.

According to the above-mentioned prior art method, since the accessibility of the following vehicle or the vehicle traveling on the neighboring traffic lane against the driver's own vehicle is detected automatically, it is expected that the information of the so-obtained accessibility to the driver (or passenger) allows to contribute the safety driving of the driver's own vehicle.

In the above-mentioned method, however, there exists a problem to be solved. If an imaging environment around the vehicle changes due to climatic changes, for example, rainfall, snowfall, fog, etc., then the unclear pictures would be brought to cause the monitoring accuracy to be deteriorated. In the present circumstances, no measures has been taken against such a deterioration in monitoring accuracy of the above-mentioned monitoring method. In other words, there remains a possibility of providing the driver or passenger with an incorrect monitoring result including such an error. Consequently, according to the prior art monitoring method, it is impossible to provide the monitoring result of the vehicle's circumference with high reliability.

Under the circumstances, there has been eagerly expected a development of new technique which is capable of maintaining the high reliability in the monitoring result of the vehicle's circumference usually.

### SUMMARY OF THE INVENTION

Under the circumstances, it is therefore an object of the present invention to provide a vehicle's circumference monitoring method by which it is possible to always provide the monitoring result of the vehicle's circumference with high reliability.

It is another object of the present invention to provide a vehicle's circumference monitoring apparatus adopting such a monitoring method.

The former object of the present invention described above can be accomplished by a vehicle's circumference monitoring method of monitoring whether there is an obstacle in the neighborhood of a vehicle by applying a designated image processing on a picture about the neighborhood of the vehicle, the picture being taken by using an imaging unit installed on the vehicle, the monitoring method comprising the steps of:
judging whether the picture taken by using the imaging unit is unclear or not; and
when it is judged that the picture is unclear,
informing a passenger on the vehicle of a fact that the present monitoring about the vehicle's neighborhood is being deteriorated in its accuracy, on the assumption that the monitoring result on the ground of such an unclear picture has a reduced reliability in accuracy.

According to the monitoring method of the present invention, when it is judged that the picture is unclear, the passenger is informed of such a fact. Thus, it is possible to accomplish the high reliability in the monitoring results brought by this method.

Preferably, when it is judged in the judging step that there is a change from a clear picture into an unclear picture, the passenger is immediately informed of the fact that the present monitoring of the vehicle's neighborhood is being deteriorated in its accuracy, on the assumption that the monitoring result on the ground of such an unclear picture has a reduced reliability in accuracy.

Also in the above case, when it is judged that the picture is unclear, the passenger is informed of such a fact at once. Thus, it is possible to accomplish the high reliability in the monitoring results.

Preferably, when it is judged in the judging step that there is a change from the unclear picture to the clear picture, the passenger is immediately informed of a fact that the monitoring accuracy about the vehicle's circumference is recovered to a normal condition, on the assumption that the monitoring result on the ground of the clear picture has a recovered reliability in accuracy.

In the above case, when the circumference monitoring accuracy is recovered to the normal condition, then the passenger is informed of such a fact at once. Thus, it is possible to accomplish the high reliability in the monitoring results usually.

Preferably, the above judging step of the present monitoring method is carried out by applying a designated image processing on the picture taken by the imaging unit.

Then, it is possible to realize the judgement of unclear picture on the ground of the taken pictures with high accuracy.

Preferably, the judging step of the present monitoring method is carried out with reference to an actual imaging environment in the neighborhood of the vehicle.

Therefore, it is possible to realize the judgement of an unclear picture while referring to the present imaging environment including various weather, for example, rainfall, snowfall, fog, etc.

The latter object of the present invention described above can be accomplished by a vehicle's circumference monitoring apparatus adopting a method of monitoring whether there is an obstacle in the neighborhood of a vehicle by applying a designated image processing on a picture about the neighborhood of the vehicle, the picture being taken by using an imaging unit installed in the vehicle, the monitoring apparatus comprising:
a picture judging unit for judging whether the picture taken by using the imaging unit is unclear or not;
an informing unit for informing an outside of the apparatus that the monitoring accuracy about the vehicle's circumference is deteriorated; and
a drive control unit for controlling the driving of the informing unit;
wherein, when it is judged by the picture judging unit that the picture taken by the imaging unit is unclear, then the driving control unit operates to drive the informing unit on the assumption that the monitoring result on the ground of such an unclear picture has a reduced reliability in accuracy.

According to the monitoring apparatus of the present invention, when it is judged that the picture is unclear, such a fact is informed to the passenger. Thus, it is possible to always accomplish the high reliability in the monitoring results brought by this method.

Preferably, the picture judging unit in the above apparatus carries out the judgement of unclear picture by applying a designated image processing on the picture taken by using the imaging unit.

Then, it is possible to realize the judgement of unclear picture on the ground of the taken pictures with high accuracy.

Preferably, the picture judging unit in the above apparatus carries out the judgement of unclear picture with reference to a present imaging situation in the neighborhood of the vehicle.

Also in the above apparatus, it is possible to realize the judgement of unclear picture while referring to the present imaging situation including various weather, for example, rainfall, snowfall, fog, etc.

These and other objects and features of the present invention will become more fully apparent from the following description and appended claims taken in conjunction with the accompany drawings.

### BRIEF DESCRIPTION OF THE DRAWINGS

Fig. 1 is a functional block diagram of a vehicle's circumference monitoring apparatus of the present invention; and
Fig. 2 is a time chart for explanation of the operation of the vehicle's circumference monitoring apparatus of the present invention.

### DESCRIPTION OF THE PREFERRED EMBODIMENT

One embodiment of the present invention will be described with reference to the drawings.

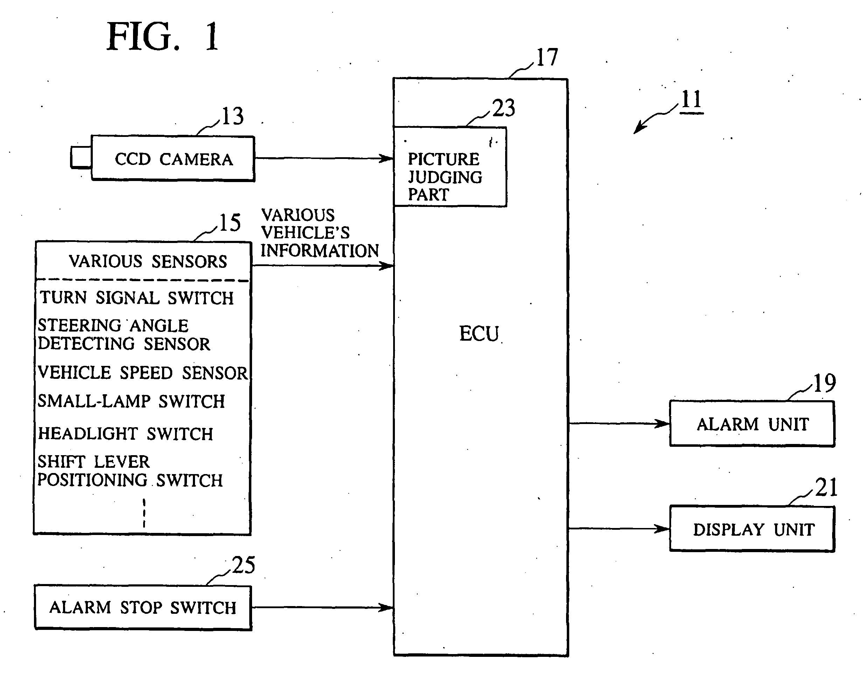

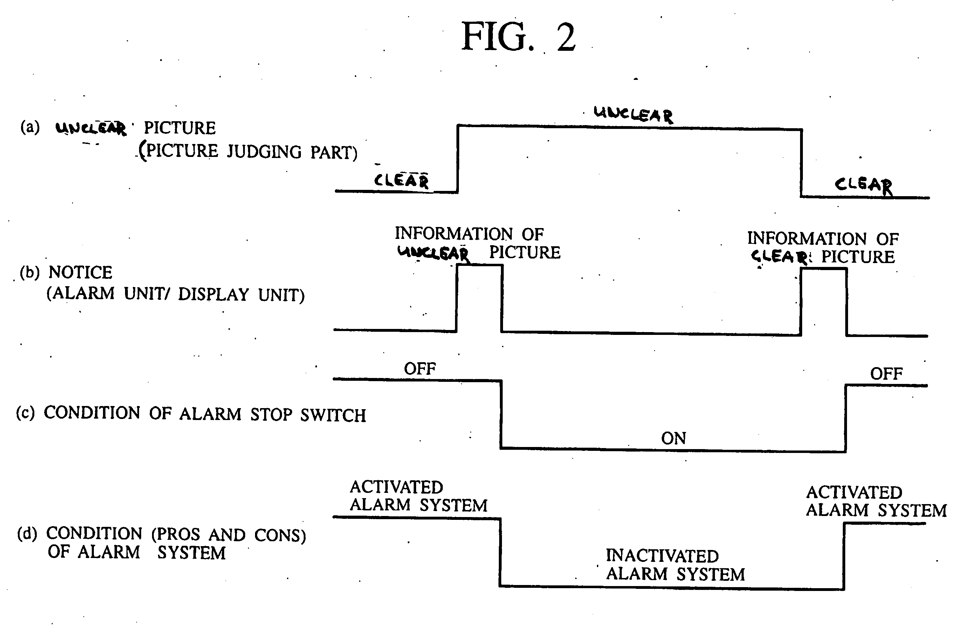

Fig. 1 is a functional block diagram of a vehicle's circumference monitoring apparatus of the present invention. In Fig. 1, reference numeral 11 designates the vehicle's circumference monitoring apparatus of the invention. Fig. 2 is a time chart for explanation of the operation of the vehicle's circumference monitoring apparatus 11.

With reference to Fig. 1, we now describe the schematic constitution of the vehicle's circumference monitoring apparatus 11 which adopts the vehicle's circumference monitoring method of the invention.

As shown in the figure, the vehicle's circumference monitoring apparatus 11 includes a CCD camera 13 operating as the imaging unit installed in the vehicle, a variety of sensors 15, a picture judging part 23 operating as the picture judging unit, an ECU 17 operating as the drive control unit, an alarm unit 19 and a display unit 21 both of which has a function as the informing unit, and an alarm stop switch 25. Note, in the specification, the word " switch" will be referred to --SW-- for short, hereinafter.

Normally, the vehicle is equipped with a plurality of CCD cameras in respective appropriate positions, for example, the vehicle's front section, the rear section, the side portions, the front/side part, the rear/side part, etc. In accordance with the requirements, these CCD cameras may be arranged in order to take pictures of various obstacles, for example, neighboring vehicles existing in the vicinity of the front section, the rear section, the side portions, the front/side part and the rear/side part of the driver's own vehicle. Of course, the vehicle may be equipped with only one CCD camera for purpose of imaging a picture of the obstacles existing in a designated direction from the vehicle. Note, the shown apparatus 11 has a single CCD camera 13 for ease of explanation.

The group of sensors 15 includes of a turn signal SW outputting the indicating direction of a turn-signal, a steering angle sensor for detecting the steering angle of the vehicle, a vehicle speed sensor for detecting the velocity of the vehicle, a small lamp SW for outputting the information of ON/OFF state in a not-shown small lamp, a headlight SW for outputting the information of ON/OFF state in a not-shown headlight, a gear position SW for outputting the information about the present position of a shift lever, etc.

The ECU 17 has the following functions of:
recognizing the obstacle(s) existing around the vehicle as the result of the application of a designated image processing on a picture taken by the CCD camera 13;
monitoring a relative positional relationship between the driver's own vehicle and the obstacle recognized by the above recognizing function;
judging the magnitude of a critical level from the relative positional relationship between the driver's own vehicle and the obstacle obtained by the monitoring function;
commanding the alarm unit 19 to raise an alarm signal when the critical level is large in comparison with a predetermined threshold level;
judging whether the picture taken by using the CCD camera 13 is regarded as an clear picture; and,
when the result of judgement brought by the above-judging function represent the presence of an unclear picture,
driving the alarm unit 19 on the assumption that the monitoring accuracy of the circumference is deteriorated due to the presence of the unclear picture.

The alarm unit 19 has three functions as follows. That is, the first function is to raise the alarm signal on receipt of the alarm command outputted from the ECU 17. The second function is to inform the passenger (driver) of a fact that the monitoring accuracy is reduced, on receipt of a drive control command outputted from the ECU 17. The third function is to inform the passenger of a fact that the monitoring accuracy is recovered to the normal condition, on receipt of the drive control command also outputted from the ECU 17.

Similarly, on receipt of the drive control command outputted from the ECU 17, the display unit 21 has a function to selectively display one of two informations: one is an information about a fact that the monitoring accuracy of the vehicle's circumference is reduced; another is an information about a fact that the monitoring accuracy of the vehicle's circumference is recovered to the normal condition.

According to the embodiment, when there is generated an information that the monitoring accuracy of the vehicle's circumference is reduced, the alarm stop SW 25 is manipulated by the passenger. That is, the alarm stop SW 25 is constituted to have a function to stop such an operation of the alarm unit 19 as informing the passenger of the large critical level.

We now describe the operation of the above-mentioned vehicle's circumference monitoring apparatus 11 with reference to Figs. 1 and 2.

First of all, the ECU 17 does apply the designated image processing on a picture which has been taken by the CCD camera 13 and sequentially inputted to the ECU 17. Further in the ECU 17, it is executed to judge whether or not the so-processed picture is inappropriate for judging the critical level about the driver's own vehicle.

For example, in the vicinity of the rear section of the vehicle, there are provided some CCD cameras 13 in order to take pictures exhibiting the vehicle's rear, left-side and right-side views. In this case, these pictures are subjected to the above designated image processing, so that it is carried out to judge whether the pictures are unclear or not.

As to the judgement of unclear/clear pictures, the above-mentioned application of the designated image processing may be replaced with another form where the judgement is carried out while referring to "an imaging environment" around the vehicle. Here, the imaging environment around the vehicle means an imaging situation containing the climatic changes, such as rainfall, snowfall, fog, etc.

As the result of the judgement of unclear/clear pictures, if it is judged that the picture on image is clear, it is carried out in the ECU 17 to apply the designated image processing on the picture taken by the CCD camera 13. For example, the designated image processing is represented by extracting the neighboring vehicle's lighting sections (e.g. small-lamp, headlight, etc.) and the profile of obstacles, as characterized points. While monitoring the relative positional relationship between the obstacle on recognition and the vehicle, the ECU 17 carries out the following operation.

That is, on the ground of the vehicle information (e.g. lighting conditions of turn signals, steering angle, vehicle speed) brought from the group of sensors 15, it is determined whether or not the driver's own vehicle is now changing its traveling lane (or turning to the right or left). For example, if it is judged that the driver's own vehicle is now changing its traveling lane, then the ECU 17 judges the magnitude of critical level on a synthetic consideration of the relative positional relationship between the obstacle and the vehicle and the approaching speed therebetween. Thus, it is executed to judge whether there is produced a possibility of collision or involving the obstacle. Note, for comparison with the obtained magnitude of critical level, the ECU 17 has a predetermined threshold level stored in a not-shown memory.

As the result of comparing the present critical level with the threshold level, when it is judged that the driver's own vehicle may be subjected to the traffic collision or involving, the ECU 17 commands the alarm unit 19 to raise the alarm signal, on the assumption of a large critical level.

On receipt of the command, the alarm unit 19 raises the alarm signal representing the critical level being enormous. In this way, it is possible to inform the passenger on the vehicle of the enormous critical level timely. Together with the information, it can be expected to effect the great contribution on the vehicle's safety driving while preventing the occurrence of accident, such as collision, involving, or the like, in advance.

When it is judged that a clear picture on image varies to an unclear picture, it is regarded in the ECU 17 that the monitoring based on the unclear picture has a reduced reliability. Therefore, as shown with (a), (b) of Fig. 2. the ECU 17 commands the alarm unit 19 and the display unit 21 to give the passenger the information about the monitoring accuracy being deteriorated. Then, on receipt of the command, the alarm unit 19 provides the passenger with a voice message, for example, "Monitoring Accuracy is Reduced. Push Alarm Stop SW.", or any warning sound, for example, a buzzer, a chime, or the like. Also, the display unit 21 provides the passenger with a display message, such as "Monitoring Accuracy is Reduced. Push Alarm Stop SW.", or the lighting of a warning lamp. In this way, the alarm stop SW 25 is turned to its side of "alarm stop" by the passenger. Consequently, the ECU 17 commands the alarm unit 19 to stop the warning operation, as shown with (c), (d) of Fig. 2. On receipt of the command, the alarm unit 19 stops the warning operation based on the judgement of critical level (inactivation of alarm system).

On the contrary, if it is judged that an unclear improper picture on image varies to a clear picture, it is regarded in the ECU 17 that the monitoring based on the proper picture has a recovered reliability. Therefore, as shown with (a), (b) of Fig. 2. the ECU 17 commands the alarm unit 19 and the display unit 21 to give the passenger the information about the monitoring accuracy being recovered to the normal condition. On receipt of the command, the alarm unit 19 provides the passenger with a voice message, such as "Monitoring Accuracy is Recovered. Release Alarm Stop SW.", or any sound, for example, a buzzer, a chime, or the like. Also, the display unit 21 provides the passenger with a display message, such as "Monitoring Accuracy is Recovered. Release Alarm Stop SW.", or the light-out of a warning lamp. Under such a situation, when the passenger manipulates the alarm stop SW 25 to the side of "alarm recover", then the ECU 17 transmits a command of recovering the alarm operation to the alarm unit 19 (activation of alarm system), as shown with (c), (d) of Fig. 2. On receipt of the command, the alarm unit 19 starts the warning operation as the result of the judgement of the critical level.

For example, we hereinabove describe the embodiment where the stop and recovery of the alarm operation is controlled by the passenger through the alarm stop SW 25. While, the same SW 25 may be eliminated in the modification. Then, if it is judged that a clear picture is shifted to an unclear one, the alarm operation would be automatically stopped. Conversely, if it is judged that an unclear picture is recovered to a clear one, the alarm operation would be automatically recovered. Then, the voice message might be, for example, "Warning is stopped as accuracy is reduced" in case of stopping the alarm operation, "Warning is recovered as accuracy is normal" in case of recovering the alarm operation, and so on.

## Claims

1. A vehicle's circumference monitoring method of monitoring whether there is an obstacle in the neighborhood of a vehicle by applying a designated image processing on a picture of the neighborhood of the vehicle, the picture being taken by an imaging unit (13) on the vehicle, **characterized in that** the monitoring method comprising the steps of:
judging whether the picture taken by using the imaging unit (13) is unclear or not; and
when it is judged that the picture is unclear, informing a passenger of the vehicle of a fact that the present monitoring about the vehicle's neighborhood is being deteriorated in its accuracy, on the assumption that the monitoring result on the ground of such an unclear picture has a reduced reliability in accuracy.

2. A vehicle's circumference monitoring method as claimed in Claim 1, **characterized in that**, when it is judged in the judging step that there is a change from a clear picture into an unclear picture, the passenger is immediately informed of the fact that the present monitoring of the vehicle's neighborhood is being deteriorated in its accuracy, on the assumption that the monitoring result on the ground of such an unclear picture has a reduced reliability in accuracy.

3. A vehicle's circumference monitoring method as claimed in Claim 1, **characterized in that**, when it is judged in the judging step that there is a change from an unclear picture into a clear picture, the passenger is immediately informed of the fact that the monitoring accuracy of the vehicle's circumference is recovered to a normal condition, on the assumption that the monitoring result on the ground of the clear picture has a recovered reliability in accuracy.

4. A vehicle's circumference monitoring method as claimed in Claim 1, **characterized in that** the judging step is carried out by applying a designated image processing on the picture taken by the imaging unit.

5. A vehicle's circumference monitoring method as claimed in Claim 1, **characterized in that** the judging step is carried out with reference to an actual imaging environment in the neighborhood of the vehicle.

6. A vehicle's circumference monitoring apparatus adopting a method of monitoring whether there is an obstacle in the neighborhood of a vehicle by applying a designated image processing on a picture of the neighborhood of the vehicle, the picture being taken by using an imaging unit (13) of the vehicle,
**characterized in that**
the monitoring apparatus comprising:
a picture judging unit (23) for judging whether the picture taken by using the imaging unit is unclear or not; an informing unit (19, 21) for informing an outside of the apparatus that the monitoring accuracy of the vehicle's circumference is deteriorated; and
a drive control unit (17) for controlling the driving of the informing unit (19, 21); wherein, when it is judged by the unclear picture judging unit (23) that the picture taken by the imaging unit (13) is unclear, then the driving,control unit (17) operates to drive the informing unit (19, 21) on the assumption that the monitoring result on the ground of such an unclear picture has a reduced reliability in accuracy.

7. A vehicle's circumference monitoring apparatus as claimed in Claim 6, **characterized in that** the picture judging unit (23) carries out the judgement of unclear picture by applying designated image processing on the picture taken by using the imaging unit (13).

8. A vehicle's circumference monitoring apparatus as claimed in Claim 6, **characterized in that** the picture judging unit (23) carries out the judgement of unclear picture with reference to the present imaging situation in the neighborhood of the vehicle.

## Patentansprüche

1. Fahrzeugumgebungsüberwachungsverfahren zum Überwachen ob sich ein Hindernis in der Nachbarschaft eines Fahrzeugs befindet, indem eine bestimmte Bildverarbeitung auf ein Bild der Nachbarschaft des Fahrzeugs angewendet wird, wobei das Bild durch eine Abbildungseinheit (13) an dem Fahrzeug aufgenommen wird, **dadurch gekennzeichnet, dass** das Überwachungsverfahren die Schritte umfasst:
Beurteilen, ob das durch die Verwendung der Abbildungseinheit (13) aufgenommene Bild unklar ist, oder ob nicht; und
wenn beurteilt ist, dass das Bild unklar ist, einen Fahrzeugpassagier über die Tatsache zu informieren, dass die vorliegende Überwachung der Nachbarschaft des Fahrzeugs in ihrer Genauigkeit verschlechtert ist, auf der Vermutung, dass das Überwachungsergebnis aufgrund eines solchen unklaren Bildes eine reduzierte Zuverlässigkeit in der Genauigkeit aufweist.

2. Fahrzeugumgebungsüberwachungsverfahren nach Anspruch 1, **dadurch gekennzeichnet, dass**,
wenn im Beurteilungsschritt beurteilt worden ist, dass es eine Änderung von einem klaren Bild zu einem unklaren Bild gibt, der Passagier unverzüglich über die Tatsache informiert wird, dass die vorliegende Überwachung der Nachbarschaft des Fahrzeugs in ihrer Genauigkeit verschlechtert ist, auf der Vermutung, dass das Überwachungsergebnis aufgrund eines solchen unklaren Bildes eine reduzierte Zuverlässigkeit in der Genauigkeit aufweist.

3. Fahrzeugumgebungsüberwachungsverfahren nach Anspruch 1, **dadurch gekennzeichnet, dass**,
wenn im Beurteilungsschritt beurteilt worden ist, dass es eine Änderung von einem unklaren Bild zu einem klaren Bild gibt, der Passagier unverzüglich über die Tatsache informiert wird, dass die Überwachungsgenauigkeit der Fahrzeugumgebung in einen normalen Zustand zurückgekehrt ist, aufgrund der Vermutung, dass das Überwachungsergebnis aufgrund des klaren Bildes eine wiederhergestellte Zuverlässigkeit in der Genauigkeit aufweist.

4. Fahrzeugumgebungsüberwachungsverfahren nach Anspruch 1, **dadurch gekennzeichnet, dass** der Beurteilungsschritt durch das Anwenden eines bestimmten Bildverarbeitungsprozesses auf das durch die Abbildungseinheit aufgenommene Bild ausgeführt wird.

5. Fahrzeugumgebungsüberwachungsverfahren nach Anspruch 1, **dadurch gekennzeichnet, dass** der Beurteilungsschritt in Bezug auf ein tatsächliches Abbildungsumfeld in der Nachbarschaft des Fahrzeugs ausgeführt wird.

6. Fahrzeugumgebungsüberwachungsvorrichtung, die ein Verfahren zur Überwachung einsetzt, ob in der Umgebung eines Fahrzeugs ein Hindernis vorhanden ist, durch Anwenden eines bestimmten Bildverarbeitungsprozesses auf ein Bild der Nachbarschaft des Fahrzeugs, wobei das Bild durch eine Abbildungseinheit (13) des Fahrzeugs aufgenommen ist, **dadurch gekennzeichnet, dass** die Fahrzeugumgebungsüberwachungsvorrichtung umfasst:
eine Bildbeurteilungseinheit (23) zum Beurteilen ob das Bild, das durch die Verwendung der Abbildungseinheit aufgenommen ist, unklar ist, oder ob nicht;
eine Informationseinheit (19, 21) zum Informieren des Äußeren der Vorrichtung, dass die Überwachungsgenauigkeit der Fahrzeugumgebung verschlechtert ist; und
eine Antriebssteuereinheit (17) zum Steuern des Antriebs der Informationseinheit (19, 21); bei der, wenn durch die Bildbeurteilungseinheit (23) beurteilt ist, dass das durch die Abbildungseinheit (13) aufgenommene Bild unklar ist, die Antriebssteuereinheit (17) dann arbeitet, um die Informationseinheit (19, 21) auf der Vermutung anzutreiben, dass das Überwachungsergebnis aufgrund eines solchen unklaren Bildes eine reduzierte Zuverlässigkeit in der Genauigkeit aufweist.

7. Fahrzeugumgebungsüberwachungsvorrichtung nach Anspruch 6, **dadurch gekennzeichnet, dass** die Bildbeurteilungseinheit (23) durch Anwenden eines bestimmten Bildverarbeitungsprozesses auf das durch die Abbildungseinheit (13) aufgenommene Bild die Beurteilung eines unklaren Bildes ausführt.

8. Fahrzeugumgebungsüberwachungsvorrichtung nach Anspruch 6, **dadurch gekennzeichnet, dass** die Bildbeurteilungseinheit (23) die Beurteilung eines unklaren Bildes mit Bezug auf die vorliegende Abbildungssituation in der Nachbarschaft des Fahrzeugs ausführt.

## Revendications

1. Procédé de surveillance des alentours d'un véhicule pour vérifier s'il y a un obstacle aux alentours d'un véhicule en appliquant un traitement d'image désigné sur une photographie des alentours du véhicule, la photographie étant prise par une unité (13) de prise d'image sur le véhicule, **caractérisé en ce que** le procédé de surveillance comprend les étapes qui consistent à:
estimer si la photographie prise grâce à l'utilisation de l'unité (13) de prise d'image est floue ou non; et
lorsqu'on estime que la photographie est floue, informer un passager du véhicule que la précision de la présente surveillance des alentours du véhicule s'est détériorée, selon l'hypothèse que le résultat de surveillance concernant une telle photographie floue a une précision dont la fiabilité est réduite.

2. Procédé de surveillance des alentours d'un véhicule tel que revendiqué dans la revendication 1, **caractérisé en ce que**, lorsqu'on estime, à l'étape d'estimation, qu'il y a un passage d'une photographie nette à une photographie floue, on informe immédiatement le passager que la précision de la présente surveillance des alentours du véhicule s'est détériorée, selon l'hypothèse que le résultat de surveillance concernant une telle photographie floue a une précision dont la fiabilité est réduite.

3. Procédé de surveillance des alentours d'un véhicule tel que revendiqué dans la revendication 1, **caractérisé en ce que**, lorsqu'on estime, à l'étape d'estimation, qu'on passe d'une photographie floue à une photographie nette, on informe immédiatement le passager que la précision de la surveillance des alentours du véhicule est ramenée à un état normal, selon l'hypothèse que le résultat de surveillance concernant la photographie nette a une précision dont la fiabilité est rétablie.

4. Procédé de surveillance des alentours d'un véhicule tel que revendiqué dans la revendication 1, **caractérisé en ce que** l'étape d'estimation est exécutée en appliquant un traitement d'image désigné sur la photographie prise par l'unité de prise d'image.

5. Procédé de surveillance des alentours d'un véhicule tel que revendiqué dans la revendication 1, **caractérisé en ce que** l'étape d'estimation est exécutée en se rapportant à un environnement de prise d'image effectif aux alentours du véhicule.

6. Appareil de surveillance des alentours d'un véhicule adoptant un procédé qui vérifie s'il y a un obstacle aux alentours d'un véhicule en appliquant un traitement d'image désigné sur une photographie des alentours du véhicule, la photographie étant prise grâce à l'utilisation d'une unité (13) de prise d'image du véhicule,
**caractérisé en ce que**
l'appareil de surveillance comprenant:
une unité (23) d'estimation de photographie pour estimer si la photographie prise grâce à l'utilisation de l'unité de prise d'image est floue ou non;
une unité (19, 21) d'information pour informer une partie extérieure à l'appareil de la détérioration de la précision de surveillance des alentours du véhicule; et
une unité (17) de commande de pilotage pour commander le pilotage de l'unité (19, 21) d'information; où, lorsque l'unité (23) d'estimation de photographie estime que la photographie prise par l'unité (13) de prise d'image est floue, alors l'unité (17) de commande de pilotage opère pour piloter l'unité (19, 21) d'information selon l'hypothèse que le résultat de surveillance concernant une telle photographie floue a une précision dont la fiabilité est réduite.

7. Appareil de surveillance des alentours d'un véhicule tel que revendiqué dans la revendication 6, **caractérisé en ce que** l'unité (23) d'estimation de photographie exécute l'estimation de photographie floue en appliquant un traitement d'image désigné sur la photographie prise grâce à l'utilisation de l'unité (13) de prise d'image.

8. Appareil de surveillance des alentours d'un véhicule tel que revendiqué dans la revendication 6, **caractérisé en ce que** l'unité (23) d'estimation de photographie exécute l'estimation de photographie floue en se rapportant à la présente situation de prise d'image aux alentours du véhicule.
